# FASCICULE DE BREVET EUROPEEN

(11) **EP 2 927 858 B1**
(45) Date de publication et mention de la délivrance du brevet: **23.12.2020**
(21) Numéro de dépôt: 15161971.5
(22) Date de dépôt: 31.03.2015
(51) Int. Cl.: G07C 9/20, H04L 9/08, G09C 1/00, G06Q 10/08

(54) **PROCÉDÉ DE RÉALISATION D'UN DISPOSITIF DE SÉCURITÉ**
VERFAHREN ZUR HERSTELLUNG EINER SICHERHEITSVORRICHTUNG
METHOD FOR MANUFACTURING A SECURITY DEVICE

(30) Priorité: 02.04.2014 FR 1452906
(43) Date de publication de la demande: 07.10.2015
(73) Titulaire: IDEMIA France, 92400 Courbevoie (FR)
(72) Inventeur: Feraud, Alban, 92700 Colombes (FR)
(74) Mandataire: Cabinet Beau de Loménie

(56) Documents cités:
- EP-A1- 1 376 492
- WO-A1-98/37526
- WO-A2-99/33033
- WO-A2-2006/110624
- DE-A1-102004 001 855
- US-A1- 2012 159 171
- US-B1- 6 325 285
- US-B1- 7 526 653
- T Charles Clancy ET AL: "Secure Smartcard-Based Fingerprint Authentication * [full version]", , 8 November 2003 (2003-11-08), XP055187437, Retrieved from the Internet: URL:https://www.cs.umd.edu/~clancy/docs/bi o-wbma2003.pdf [retrieved on 2015-05-05]

## Description

La présente invention concerne un dispositif de sécurité apte à stocker des données confidentielles associées à un titulaire dudit dispositif de sécurité et plus particulièrement un procédé de réalisation sécurisé d'un tel dispositif de sécurité.

Il est connu de réaliser un tel dispositif de sécurité en deux phases. Dans une première phase de préparation, l'ensemble des données est collecté, typiquement par l'organisme émetteur du dispositif de sécurité. Au cours d'une seconde phase de production, le dispositif de sécurité est effectivement produit : un support physique est réalisé et les données confidentielles sont chargées dans une mémoire dudit support. Le procédé se termine par une livraison du dispositif de sécurité à son titulaire.

Le problème que l'on rencontre est que la phase de production peut être sous-traitée et ainsi ne pas être réalisée par et sous le contrôle direct de l'organisme émetteur. Il existe alors, au cours de cette phase, un risque de rupture de la confidentialité des données confidentielles. EP1376492A décrit par exemple un procédé de réalisation d'une carte à puce préservant la confidentialité d'un programme de personnalisation vis-à-vis d'intervenants dans la chaîne de production de la carte.

La présente invention remédie à cet inconvénient en proposant un procédé où les données confidentielles sont cryptées, et donc masquées, pendant toute la phase de production. Pour cela la phase de préparation comprend une étape supplémentaire de cryptage des données confidentielles. Le procédé comprend de plus une phase supplémentaire finale d'activation comprenant une étape de décryptage.

Le cryptage et le décryptage sont basés sur une information biométrique du titulaire, afin de garantir son identité et sa présence effective lors de l'activation.

L'invention a pour objet un procédé de réalisation d'un dispositif de sécurité apte à stocker des données confidentielles selon la revendication 1 et comprenant les phases suivantes : une phase de préparation comprenant les étapes suivantes : collecte des données confidentielles, transformation des données confidentielles en données cryptées, au moyen d'un cryptage, une phase de production comprenant les étapes suivantes : fabrication d'un dispositif de sécurité vierge, stockage desdites données cryptées dans ledit dispositif de sécurité, livraison du dispositif de sécurité et une phase d'activation comprenant les étapes suivantes : transformation des données cryptées pour retrouver les données confidentielles, au moyen d'un décryptage, puis stockage des données confidentielles décryptées dans le dispositif de sécurité. La phase de préparation comprend encore une étape de première acquisition d'un premier enregistrement représentatif d'une information biométrique auprès du titulaire du dispositif de sécurité, et le cryptage utilise le premier enregistrement représentatif d'une information biométrique pour déterminer une clé de cryptage, de telle manière que la transformation inverse ne puisse être réalisée qu'au moyen de ladite information biométrique et la phase d'activation comprend encore une étape de deuxième acquisition d'un deuxième enregistrement représentatif de la même information biométrique auprès du titulaire, et le décryptage utilise le deuxième enregistrement représentatif de l'information biométrique pour déterminer une clé de décryptage.

Selon une autre caractéristique, les transformations de cryptage et de décryptage utilisent des algorithmes de type « crypto-biométrique ».

Selon une autre caractéristique, le dispositif de sécurité comprend une unité de traitement et l'opération de décryptage est réalisée par l'unité de traitement du dispositif de sécurité.

Selon une autre caractéristique, l'opération de décryptage n'est réalisable qu'une seule fois.

Selon une autre caractéristique, l'opération de décryptage est apte à fournir un compte rendu indiquant le bon ou le mauvais fonctionnement du décryptage.

L'invention concerne encore un dispositif de sécurité selon la revendication 6.

L'invention concerne encore un document électronique comprenant un tel dispositif de sécurité.

Selon une autre caractéristique, le document électronique est un document de voyage.

Selon une autre caractéristique, les données confidentielles comprennent une photo du porteur et/ou au moins une empreinte digitale du porteur.

D'autres caractéristiques, détails et avantages de l'invention ressortiront plus clairement de la description détaillée donnée ci-après à titre indicatif en relation avec des dessins sur lesquels :
- la figure 1 présente schématiquement le procédé selon l'invention,
- la figure 2 illustre le principe du « coffre flou ».

L'invention concerne un dispositif de sécurité 1 apte à stocker des données confidentielles. Dans le cadre de la présente, un tel dispositif de sécurité 1 est typiquement réalisé par un dispositif électronique comprenant une mémoire informatique apte à stocker des données numériques. Un tel dispositif peut, prendre des formes variées tel que : clé USB, carte mémoire SD ou autre format, carte à microcircuit, etc. Un tel dispositif de sécurité 1 permet à un titulaire 7 de disposer d'un support de stockage, le plus souvent portatif, afin de pouvoir emporter avec lui des données numériques, le plus souvent critiques. Un tel dispositif de sécurité 1 peut être utilisé par son titulaire 7, typiquement en conjonction avec un lecteur apte à lire les données numériques stockées dans le dispositif de sécurité 1, pour communiquer ou utiliser lesdites données numériques.

Ainsi un dispositif de sécurité 1 peut faire fonction ou être incorporé dans un document identitaire, tel un document de voyage, par exemple un passeport ou une carte d'identité, ou encore dans une carte bancaire, un badge d'accès, une carte médicale, etc. Selon la fonction du dit dispositif de sécurité les données confidentielles stockées dans le dispositif de sécurité varient.

Ainsi pour document de voyage, tel un passeport, les données confidentielles peuvent comprendre une représentation d'une information biométrique, telle une empreinte digitale, palmaire, faciale ou de l'iris. Une comparaison de cette représentation avec une acquisition de la même information biométrique auprès du porteur du document de voyage permet d'authentifier ou non ledit porteur comme étant le titulaire du document de voyage.

Pour une carte bancaire les données confidentielles peuvent être des coordonnées de compte bancaire, le solde dudit compte, ou un code secret permettant de réaliser des opérations bancaires, tel un retrait d'argent.

Pour un badge d'accès les données confidentielles peuvent être les zones accessibles, les heures autorisées et un code secret permettant d'autoriser l'accès audit badge et à son porteur.

Pour une carte médicale les données confidentielles peuvent être le contenu du dossier médical du titulaire, la date limite de sa protection sociale, etc.

Dans tous les cas, ces données sont critiques et leur confidentialité doit être préservée. Le plus souvent le dispositif de sécurité 1 est nominatif et peut être associé à son titulaire.

Afin de bien distinguer les objets manipulés et leurs états respectifs, il est utilisé pour certains d'entre eux plusieurs symboles de référence.

Ainsi un dispositif de sécurité est génériquement désigné 1. Il est ensuite distingué selon son état : un dispositif de sécurité vierge est désigné 10, un dispositif de sécurité stockant des données cryptées est désigné 11, et un dispositif de sécurité stockant des donnant confidentielles en clair est désigné 12.

De même, les données confidentielles sont génériquement désignées 2. Lorsque ces données sont en clair, avant cryptage, elles sont désignées 20. Une fois cryptées, elles sont désignées 21. Après décryptage, elles sont désignées 22.

Une information biométrique est génériquement désignée 3. Suite à une acquisition d'une information biométrique 3, il est obtenu une représentation de cette information biométrique sous forme d'un enregistrement. On distingue un enregistrement de référence 31, relatif à une information biométrique 3, obtenu lors d'une première acquisition 41, en phase de préparation et un enregistrement de vérification 32, relatif à une même information biométrique 3, obtenu lors d'une deuxième acquisition 61, en phase d'activation.

De manière analogue, le porteur d'un dispositif de sécurité 1 est génériquement désigné 7. Lorsque ce porteur est le titulaire authentifié, il est désigné 71. En attente d'authentification, un porteur qui se prétend le titulaire est désigné 72.

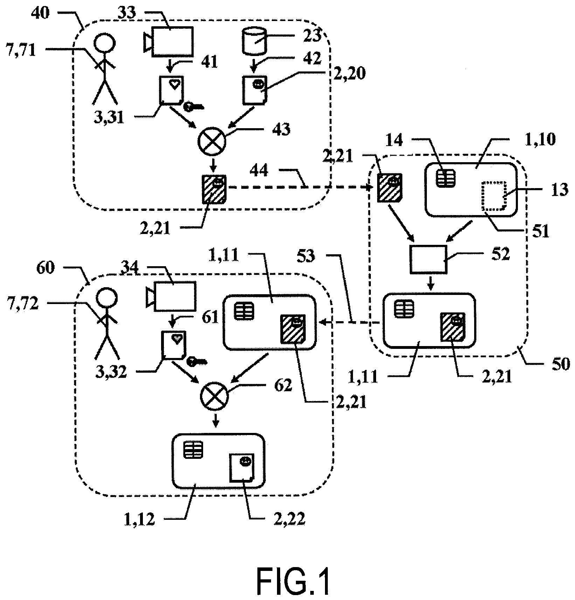

Tel qu'illustré à la figure 1, un procédé de réalisation d'un tel dispositif de sécurité 1 apte à stocker des données confidentielles 2, peut être décomposé en trois phases : une phase de préparation 40, une phase de production 50 et une phase d'activation 60.

La phase de préparation 40 comprend toutes les étapes préalables et nécessaires à la production effective d'un dispositif de sécurité 1. Elle comprend au moins une étape de collecte 42 des données confidentielles 2 et une étape de cryptage 43. Selon un mode de réalisation, la phase de préparation 40 comprend encore une étape d'acquisition 41 d'une information biométrique 3 auprès du titulaire 7,71 du futur dispositif de sécurité 1

Afin de garantir la sécurité de cette phase critique, en ce qu'elle manipule les données confidentielles et surtout qu'elle les associe avec un titulaire 7, il convient de vérifier l'identité dudit titulaire 7. Aussi cette phase de préparation 40 est avantageusement réalisée par l'organisme émetteur, sous son contrôle, dans une de ses agences. Ainsi dans le cas d'un document identitaire, l'organisme émetteur est un Etat, et cette phase de préparation 40 est typiquement réalisée dans une agence gouvernementale, telle qu'une préfecture, sous la surveillance d'un préposé à l'état civil.

Diverses vérifications préalables peuvent ici être réalisées : vérification de l'identité du titulaire, vérification de l'unicité du document identitaire, etc.

Concernant le procédé de réalisation du dispositif de sécurité 1, la phase de préparation 40 comprend une étape de collecte 42 des données confidentielles 2 que l'on souhaite voir être disposées dans le dispositif de sécurité 1. Ces données peuvent être, selon leur nature : issues d'une base de données 23 ou tout autre support informatique, tel un réseau, pour des données d'état civil par exemple, saisies par le préposé, pour des données indiquées par le titulaire ou extraites d'un ancien document imprimé par exemple, mesurée ou acquise par un capteur, pour des données biométriques, par exemple. Toutes ces données confidentielles sont réunies dans un enregistrement 2 et sont à cette phase sous une forme non masquée 20, en clair.

En l'absence d'utilisation d'une information biométrique 3, le cryptage et le décryptage sont réalisés au moyen de clés de cryptage et de décryptage partagées, au moins entre l'émetteur réalisant la phase de préparation et l'organisme, qui peut être le même, qui active le dispositif de sécurité 1 lors de la phase d'activation 60.

En parallèle, selon l'invention, il est procédé à une opération d'acquisition 41 d'une information biométrique 3,31 auprès du titulaire 7,71 du futur dispositif de sécurité 1. Il est important que cette étape soit réalisée avec le titulaire autorisé 71. Aussi ce dernier est-il préférablement authentifié au préalable par l'organisme émetteur. Cette acquisition 41 est réalisée au moyen d'un capteur 33 adapté au type d'information biométrique 3. Ainsi si l'information biométrique 3 est une empreinte digitale, le capteur 33 est un capteur d'empreinte digitale. Il en serait de manière analogue pour une empreinte faciale, d'iris, palmaire, ADN ou autre.

Le produit de cette première acquisition 41 est un premier enregistrement 31 constituant une première représentation de l'information biométrique 3.

A l'issue des précédentes étapes, il est procédé à une transformation des données confidentielles 2,20 collectées, en données cryptées 2,21. Ces données cryptées 2,21 sont alors masquées. S'il advenait qu'elles soient accessibles et lues, elles ne pourraient pas être utilisées. Ceci est obtenu au moyen d'un cryptage réalisé au moyen d'une clé de cryptage. Ces données sont alors protégées et/ou non exploitables. Tant que la phase d'activation, décrite plus avant n'a pas été réalisée, une commande de lecture n'est pas exécutée et/ou un message d'erreur en envoyé en cas de tentative. Dans tous les cas, si un accès est possible, il ne permet d'accéder qu'aux données cryptées et donc inutilisables.

Selon le mode de réalisation de l'invention utilisant la biométrie 3, ce cryptage se caractérise en ce que ladite première information biométrique 31 est utilisée soit directement comme clé de cryptage, soit indirectement pour obtenir, par autorisation d'accès ou par construction, une clé de cryptage. La transformation mise en œuvre par ce cryptage est telle que la transformation inverse ne puisse être réalisée qu'au moyen de la même information biométrique 3, le cas échéant sous la forme d'un deuxième enregistrement 32 de l'information biométrique 3, obtenu par une deuxième acquisition 61.

Les données cryptées 2,21 sont ensuite transmises 44 à l'opérateur en charge de la phase de production 50. La transmission 44 peut être réalisée par tout moyen, de préférence sécurisé.

La phase de production met en œuvre des moyens techniques et organisationnels importants afin de garantir la sécurité des étapes qu'elle inclut. Les moyens cryptographiques, par exemple, nécessitent des investissements en moyen et en personnel importants. De plus ces moyens sont liés à une technologie particulière. Aussi le plus souvent, un organisme émetteur s'appuie sur un unique centre de production centralisé. Ainsi, par exemple en France, un unique établissement est en charge de la fabrication des documents de voyage. Toutes les agences émettrices (préfectures, consulats, ambassades, etc.) sous-traitent la production à cet unique centre de production. Dans certains autres cas le centre de production peut encore être expatrié. L'unicité et la centralisation du site de production, si elle est avantageuse économiquement, constitue une faiblesse sécuritaire. Une fuite des informations confidentielles à ce niveau serait catastrophique. Aussi est-il particulièrement avantageux, selon l'invention, que les données confidentielles 2 ne soient jamais sous une forme en clair 20,22, mais toujours sous une forme cryptée 21 et donc au moins partiellement masquée pour le centre de production qui ne les manipule jamais en clair, pendant toute la phase de production 50 où lesdites données confidentielles 2 transitent par le site de production.

La phase de production 50 comprend les étapes de fabrication effective du dispositif de sécurité 1. Au cours d'une étape 51 un dispositif de sécurité 1, sous une forme vierge 10 est fabriqué. Ce dispositif de sécurité vierge 1,10 comprend un support, figuré ici par une carte plastique rectangulaire. Ce support intègre une mémoire 13, initialement vide, figurée par un rectangle pointillé. Elle peut encore, mais pas nécessairement, comprendre un microcircuit 14, figuré ici par sa partie visible : une plaque de contact.

Au cours d'une étape de production 52, les données confidentielles 2, sous forme cryptées 21, telles que reçues de l'agence ayant procédé à la phase de préparation 40, sont stockées dans la mémoire 13 du dispositif de sécurité 1. Ce faisant, le dispositif de sécurité 1, passe d'une forme vierge 10 à une forme 11 stockant des données confidentielles cryptées 2,21. A l'issue de cette étape de production 52, le dispositif de sécurité 1,11 produit est livré 53 à son destinataire.

Selon l'organisation et la criticité du dispositif de sécurité 1, cette livraison peut être réalisée à une agence de l'organisme émetteur en charge de la remise au titulaire 7, par exemple l'agence ayant procédé à la phase de préparation. Alternativement la livraison peut encore être réalisée directement au titulaire 7.

A ce stade, le dispositif de sécurité 1,11 n'est pas opérationnel. Les données confidentielles 2,21 sont cryptées et ne peuvent être lues, transmises ou utilisées d'aucune manière. Il doit être procédé à une activation.

La phase d'activation 60 est une phase post-production qui permet de rendre le dispositif de sécurité 1 opérationnel en ce qu'elle permet de démasquer les données confidentielles 2.

Selon le mode de cryptage, un décryptage adapté est appliqué. En l'absence de biométrie, une clé de décryptage, associée à la clé de cryptage est employée. Le terme « associée » indique ici que le clé de décryptage est directement employée pour réaliser le décryptage, ou encore qu'elle permet d'obtenir, en autorisant un accès ou en servant de base à sa construction, une clé de décryptage effective.

Selon le mode de réalisation de l'invention utilisant la biométrie, la protection des données confidentielles 2 a été réalisée par un cryptage au moyen de l'information biométrique 3. Aussi la présence physique du titulaire 7,71 qui a initialement fourni cette information biométrique 3,31 lors de l'acquisition 41 en phase préparatoire 40, est nécessaire à la bonne réalisation de l'activation.

Dans ce cas, durant la phase d'activation 60 il est procédé à une nouvelle, ou deuxième acquisition 61 de l'information biométrique 3. Il convient de noter que le type de l'information biométrique 3 est le même que lors de la première acquisition 41. Ainsi si la première acquisition 41 a relevé une empreinte de l'iris gauche, la deuxième acquisition 61 relève aussi une empreinte de l'iris gauche.

S'agissant d'une information biométrique 3, une nouvelle acquisition 61 doit être réalisée. Cette nouvelle acquisition 61 nécessite la présence physique du titulaire 7,72, ici une personne 72 qui se prétend le titulaire. Cette deuxième acquisition 61, réalisée au moyen d'un capteur 34 similaire, ou même identique, au capteur 33, produit un deuxième enregistrement 32 constituant une deuxième représentation de la même information biométrique 3.

Muni de ce deuxième enregistrement biométrique 32, il est procédé à une étape de transformation 62 des données cryptées 2,21 stockées sur le dispositif de sécurité 1,11. Cette transformation 62 a pour but de transformer lesdites données cryptées 2,21 afin d'obtenir des données décryptées 2,22, qui si tout se déroule bien, reproduisent les données confidentielles 2,20 en clair, initiales. Cette transformation inverse est réalisée au moyen d'un décryptage utilisant comme clé de décryptage, la deuxième information biométrique 32 précédemment acquise lors de la deuxième acquisition 61. Il est ainsi obtenu un dispositif de sécurité 1,12 contenant les données décryptées 2,22 et ainsi maintenant utilisable et opérationnel.

Dans les cas les plus sécurisés, la phase d'activation est avantageusement réalisée par une agence en charge de l'activation et de la délivrance du dispositif de sécurité 1 à son titulaire 7, qui peut être l'agence ayant procédé à la phase de préparation 40. Ceci permet de procéder à des vérifications d'identité, et notamment de s'assurer que le prétendu titulaire 72 est bien qui il prétend être : le titulaire autorisé 71, avant de réaliser l'activation et la remise du dispositif de sécurité 1 au dit titulaire 72.

Il convient cependant de noter que techniquement, l'activation peut être réalisée par le titulaire 7 lui-même. Dans ce cas le dispositif de sécurité 1, après production, peut être directement livré au titulaire 7. Cette étape d'activation reste malgré tout sécurisée en ce que seul le titulaire 71 qui a fournit l'information biométrique 3 lors de la première acquisition 41 peut espérer réaliser avec succès l'activation en fournissant à nouveau l'information biométrique 3.

L'utilisation de la biométrie et de techniques cryptobiométriques est très avantageuse en ce qu'elle interdit toute transférabilité à une tierce personne de la capacité d'activation.

Il est avantageusement utilisé, pour réaliser les transformations de cryptage et de décryptage à partir d'information biométrique 3, des algorithmes de type « crypto-biométrique » permettant de générer une clé de cryptage et/ou de décryptage à partir d'au moins une donnée biométrique. Ces algorithmes permettent la génération d'une clé de cryptage et/ou de décryptage à partir d'au moins une donnée biométrique, et ce, en s'affranchissant des variabilités inhérentes aux données biométriques ainsi qu'aux techniques d'acquisition mise en œuvre, de sorte à toujours reproduire la même clé.

Il est possible de distinguer au moins deux modes d'algorithme de type « crypto-biométrique ». Ainsi un premier mode attache la clé à la biométrie : on parle de mode à clé liée (en anglais : key binding mode). La biométrie permet de « démasquer » la clé. Ce mode est avantageux en ce que la valeur de la clé est indépendante de la biométrie et peut ainsi être révoquée en cas de corruption sans devoir révoquer la biométrie. Dans un autre mode la clé est générée à partir la biométrie. On parle alors de mode à clé générée (en anglais : key génération mode).

De tels algorithmes de « crypto-biométrie » sont aptes à utiliser des images ou représentations d'un même phénomène biométrique pour accéder ou reconstruire un valeur de clé cryptographique constante. Ainsi le premier enregistrement biométrique 31 est une première représentation de l'information biométrique 3 obtenue auprès du titulaire 7,71. De même le deuxième enregistrement biométrique 32 est une deuxième représentation de la même information biométrique 3 obtenue auprès du titulaire 7,72. En supposant que les deux titulaires 71,72 soient bien une seule et même personne, les conditions peuvent légèrement varier entre la première acquisition 41 et la deuxième acquisition 61. Aussi le premier enregistrement biométrique 31 peut différer du deuxième enregistrement biométrique 32. Malgré cela, un algorithme de type « crypto-biométrique » est à même de reconstruire la même valeur de clé cryptographique à partir de chacun des deux enregistrements biométriques 31,32 issus de la même information biométrique 3 du même titulaire 7.

Un mode de réalisation possible d'un algorithme « crypto-biométrique » est le « coffre flou biométrique » (en anglais « biometric fuzzy vault »).

Le principe et la mise en œuvre d'un tel algorithme de type « coffre flou » est connu et décrit dans l'article « A fuzzy vault scheme » de Ari Juels et Madhu Sudan. Un exemple d'utilisation crypto biométrique est décrit dans l'article « Secure Smartcard-Based Fingerprint Authentication » de T. Charles Clancy, Negar Kiyavash et Dennis J. Lin.

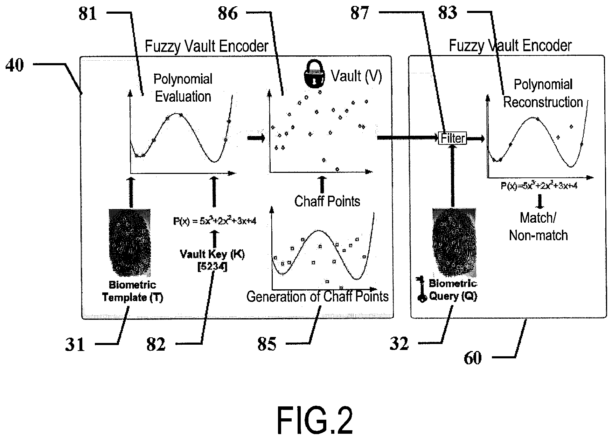

Ce principe est rappelé et illustré en relation avec la figure 2 qui présente un synoptique d'un mode de réalisation d'un algorithme de « coffre flou biométrique » avec une composante biométrique, ici une empreinte digitale. Il ne s'agit ici que d'une mise en œuvre possible d'un algorithme de « coffre flou biométrique », de très nombreuses variantes étant possibles.

Il est réalisé une acquisition d'une information biométrique 3, par exemple ici une empreinte digitale. Cette acquisition est traitée de manière classique pour en extraire des points caractéristiques ou minuties qui viennent former un premier enregistrement 31 issu de ladite information biométrique 3. Dans la phase de préparation 40, correspondant au bloc de gauche, l'information à protéger, à savoir la clé de cryptage 82 utilisée pour crypter les données confidentielles 2 associée à un code correcteur d'erreur, est encodée sous la forme d'un polynôme 81 sous forme d'une séquence de coefficients. Les images par le polynôme 81, de chacune des valeurs du premier enregistrement 31 sont calculées (coordonnée Y associée à chaque valeur X), de sorte à déterminer un ensemble de points du polynôme 81. Il est encore procédé, afin de brouillage, à un ajout de points aléatoires (bruit additionnel) aux points déterminés précédemment. Tous ces points forment un nuage de points ou « coffre flou » 86. Ce nuage de points est stocké dans le dispositif de sécurité 1.

Lors de la phase de vérification ou activation 60, correspondant au bloc de droite, il est procédé à une nouvelle acquisition de la même information biométrique 3. Cette acquisition est traitée de manière classique et similaire pour en extraire des points caractéristiques ou minuties qui viennent former un deuxième enregistrement 32 issu de ladite information biométrique 3.

Il est ensuite procédé à une étape de filtrage 87 en comparant les valeurs du deuxième enregistrement 32 aux points du coffre flou 86 pour ne conserver que les points du nuage dont l'abscisse correspond aux valeurs du deuxième enregistrement 32. Dans la mesure où le deuxième enregistrement 32 est issu d'une même information biométrique 3, cette étape de filtrage 87 conserve une majorité de points pertinents du nuage, correspondant à l'information biométrique 3, et rejette une majorité de points aléatoires 85 du nuage précédemment ajoutés. Aussi pour une même information biométrique 3, l'ensemble des points du nuage restants après filtrage 87 est assez proche de l'ensemble des points du premier enregistrement 31. Au contraire si l'information biométrique 3 est différente, nombre de points aléatoires 85 du nuage sont conservés empêchant d'aboutir.

Après filtrage 87, une détermination d'un deuxième polynôme caractéristique 83 est réalisée sur la base des points ainsi filtrés. Si les points issus du filtrage sont suffisamment proches des points du premier enregistrement 31, le deuxième polynôme caractéristique 83 est proche du premier polynôme caractéristique 81. L'équation du polynôme caractéristique 83 est déterminée à l'aide d'une interpolation polynomiale (par exemple une interpolation de Lagrange) permettant ainsi de reconstituer l'information codée au travers de séquence des coefficients du polynôme. Il est ainsi possible de réaliser le décryptage.

Afin d'aboutir au même résultat : même clé 82 que celle utilisée pour le cryptage, et ce malgré les inévitables disparités intrinsèques du procédé entre le premier enregistrement 31 et le deuxième enregistrement 32, il est fait appel à des techniques de correction d'erreur permettant de reconstituer de manière certaine la valeur de clé de décryptage 82 à partir de l'interpolation du polynôme caractéristique 83. En effet, l'information codée dans le nuage de points contient non seulement la clé de décryptage 82, mais aussi un code correcteur d'erreur. Des méthodes de correction d'erreur comme les codes de Hamming par exemple peuvent alors être mis en œuvre.

Selon un mode de réalisation, le dispositif de sécurité 1 comprend une unité de traitement 14. Ceci est souvent le cas en pratique. Ainsi une carte à microcircuit, une carte mémoire au format SD ou tout autre format, une clé USB sont des dispositifs qui comprennent une unité de traitement 14. Une telle unité de traitement 14 est utilisée pour sécuriser l'accès à la mémoire 13 du dispositif de sécurité 1. Toute connexion ou accès à la mémoire 13 ne peut se faire que via les routines, méthodes, application logicielles exécutables sur ladite unité de traitement 14. Ainsi un accès à la mémoire 13 n'est possible que s'il est autorisé par une application logicielle résidente dans le dispositif de sécurité 1. Cette autorisation peut être soumise à des contrôles préalables.

La présence d'une telle unité de traitement 14 permet de faire réaliser l'opération de décryptage 62 par l'unité de traitement 14 du dispositif de sécurité 1. Ainsi, avantageusement, l'opération de décryptage 62 est réalisée de manière autonome par le dispositif de sécurité 1. Avantageusement, lors de cette opération de décryptage 62, les données confidentielles 2, que ce soit sous leur forme cryptée 21 ou sous leur forme décryptée 22, ne quittent jamais la mémoire 13 du dispositif de sécurité 1. Le décryptage 62 est avantageusement exécuté in situ.

Avantageusement, afin de renforcer encore la sécurité, le dispositif de sécurité 1, est configuré, par exemple par programmation, de telle manière à ne pouvoir réaliser l'opération de décryptage 62 qu'une seule fois. Ainsi si une première opération de décryptage 62 aboutit à un échec, par exemple parce que le dispositif de sécurité 1 a été intercepté et est présenté lors de la phase d'activation 60 par un porteur 72 qui n'est pas le titulaire autorisé 71, correspondant à la première acquisition 41, le dispositif de sécurité 1 n'est pas activé, suite à un échec lors du décryptage 62. Il n'est alors plus possible de retenter une deuxième phase d'activation 60, y compris pour le titulaire autorisé 71. Ainsi un échec, potentiellement indicateur d'une corruption, est renforcé par une mesure irréversible rendant le dispositif de sécurité 1 inutilisable.

Selon une caractéristique avantageuse, l'opération de décryptage 62 est apte à fournir un compte rendu indiquant le bon ou le mauvais fonctionnement du décryptage 62. Une telle indication permet d'informer l'opérateur en phase d'activation 60 si l'activation est ou non réussie.

## Revendications

1. Procédé de réalisation d'un dispositif de sécurité (1) apte à stocker des données confidentielles (2) associées au titulaire dudit dispositif de sécurité, ***caractérisé en* ce *qu'il*** comprend les phases suivantes :
- une phase de préparation (4) comprenant les étapes suivantes :
- **une étape de première acquisition (41) d'un premier enregistrement (31) représentatif d'une information biométrique (3) auprès du titulaire (7,71) du dispositif de sécurité (1),**
- collecte (42) des données confidentielles (2,20),
- transformation (43) des données confidentielles (2,20) en données cryptées (2,21), au moyen d'un cryptage **utilisant le premier enregistrement (31) représentatif d'une information biométrique (3) pour déterminer une clé de cryptage, de telle manière que la transformation inverse (62) ne puisse être réalisée qu'au moyen de ladite information biométrique (3),**
- une phase de production (5) comprenant les étapes suivantes :
- fabrication (51) d'un dispositif de sécurité vierge (1,10),
- stockage (52) desdites données cryptées (2,21) dans ledit dispositif de sécurité (1), puis
- livraison du dispositif de sécurité (1,11), puis
- une phase d'activation (6) post-production comprenant les étapes suivantes :
∘ - **une étape de deuxième acquisition (61) d'un deuxième enregistrement (32) représentatif de la même information biométrique (3) auprès du titulaire (7,72)**
∘ - transformation (62) des données cryptées (2,21) pour retrouver les données confidentielles (2,22), au moyen d'un décryptage, de sorte que le dispositif de sécurité contienne lesdites données décryptées, **le décryptage utilisant le deuxième enregistrement (32) représentatif de l'information biométrique (3) pour déterminer une clé de décryptage,** puis
stockage des données confidentielles dans le dispositif de sécurité.

2. Procédé selon la revendication 1, où les transformations de cryptage (43) et de décryptage (62) utilisent des algorithmes de type « crypto-biométrique ».

3. Procédé selon l'une quelconque des revendications **1** ou 2, où le dispositif de sécurité (1) comprend une unité de traitement (14) et où l'opération de décryptage (62) est réalisée par l'unité de traitement (14) du dispositif de sécurité (1).

4. Procédé selon l'une quelconque des revendications **1** à **3,** où l'opération de décryptage (62) n'est réalisable qu'une seule fois.

5. Procédé selon l'une quelconque des revendications **1** à **4,** où l'opération de décryptage (62) est apte à fournir un compte rendu indiquant le bon ou le mauvais fonctionnement du décryptage.

6. Dispositif de sécurité (1) obtenu par le procédé selon l'une quelconque des revendications **1** à **5,** le dispositif de sécurité comprenant une unité de traitement (14) configurée pour réaliser l'opération de décryptage dudit procédé.

7. Document électronique comprenant un dispositif de sécurité (1) selon la revendication 6.

8. Document électronique selon la revendication **7,** où le document électronique est un document de voyage.

9. Document électronique selon l'une quelconque des revendications 7 ou **8,** où les données confidentielles (2,20) comprennent une photo du porteur et/ou au moins une empreinte digitale du porteur.

## Patentansprüche

1. Verfahren zum Herstellen einer Sicherheitsvorrichtung (1), die geeignet ist, vertrauliche Daten (2), welche dem Inhaber der Sicherheitsvorrichtung zugeordnet sind, zu speichern, **dadurch gekennzeichnet, dass** es die folgenden Phasen umfasst:
- eine Vorbereitungsphase (4), welche die folgenden Schritte umfasst:
- einen Schritt einer ersten Erfassung (41) einer ersten Registrierung (31), die für eine biometrische Information (3) repräsentativ ist, beim Inhaber (7, 71) der Sicherheitsvorrichtung (1),
- Sammeln (42) der vertraulichen Daten (2, 20),
- Umwandeln (43) der vertraulichen Daten (2, 20) in verschlüsselte Daten (2, 21) mittels einer Verschlüsselung unter Verwendung der ersten Registrierung (31), die für eine biometrische Information (3) repräsentativ ist, um einen Verschlüsselungsschlüssel zu bestimmen, so dass die Rückumwandlung (62) nur mittels der biometrischen Information (3) durchgeführt werden kann,
- eine Herstellungsphase (5), welche die folgenden Schritte umfasst:
- Herstellen (51) einer unbeschriebenen Sicherheitsvorrichtung (1, 10),
- Speichern (52) der verschlüsselten Daten (2, 21) in der Sicherheitsvorrichtung (1), anschließend
- Bereitstellen der Sicherheitsvorrichtung (1, 11), dann
- eine Aktivierungsphase (6) nach der Herstellung, welche die folgenden Schritte umfasst:
o - einen Schritt einer zweiten Erfassung (61) einer zweiten Registrierung (32), die für dieselbe biometrische Information (3) repräsentativ ist, beim Inhaber (7, 72),
∘ - Umwandeln (62) der verschlüsselten Daten (2, 21) zum Wiederauffinden der vertraulichen Daten (2, 22) mittels einer Entschlüsselung, so dass die Sicherheitsvorrichtung die entschlüsselten Daten enthält, wobei die Entschlüsselung die zweite Registrierung (32), welche für die biometrische Information (3) repräsentativ ist, verwendet, um einen Entschlüsselungsschlüssel zu bestimmen, anschließend
Speichern der vertraulichen Daten in der Sicherheitsvorrichtung

2. Verfahren nach Anspruch 1, bei dem die Verschlüsselungsumwandlung (43) und die Entschlüsselungsumwandlung (62) Algorithmen vom "kryptobiometrischen" Typ verwenden.

3. Verfahren nach einem der Ansprüche 1 oder 2, bei dem die Sicherheitsvorrichtung (1) eine Verarbeitungseinheit (14) umfasst und bei dem der Entschlüsselungsvorgang (62) durch die Verarbeitungseinheit (14) der Sicherheitsvorrichtung (1) durchgeführt wird.1

4. Verfahren nach einem der Ansprüche 1 bis 3, bei dem der Entschlüsselungsvorgang (62) nur ein einziges Mal durchführbar ist. 1

5. Verfahren nach einem der Ansprüche 1 bis 4, bei dem der Entschlüsselungsvorgang (62) geeignet ist, einen Bericht bereitzustellen, der das richtige oder falsche Funktionieren der Entschlüsselung angibt.1

6. Sicherheitsvorrichtung (1), die durch das Verfahren nach einem der Ansprüche 1 bis 5 erhalten wird, wobei die Sicherheitsvorrichtung eine Verarbeitungseinheit (14) umfasst, welche dazu ausgelegt ist, den Entschlüsselungsvorgang des Verfahrens durchzuführen.1

7. Elektronisches Dokument, das eine Sicherheitsvorrichtung (1) nach Anspruch 6 umfasst.

8. Elektronisches Dokument nach Anspruch 7, wobei das elektronische Dokument ein Reisedokument ist.

9. Elektronisches Dokument nach einem der Ansprüche 7 oder 8, bei dem die vertraulichen Daten (2, 20) ein Foto des Inhabers und/oder wenigstens einen Fingerabdruck des Inhabers umfassen.

## Claims

1. A method for producing a security device (1) able to store confidential data (2) associated with the holder of said security device, ***characterized in that it*** comprises the following phases:
- a preparation phase (4) comprising the following steps:
- **a step of first acquisition (41) of a first recording (31) representative of a biometric information (3) from the holder (7, 71) of the security device (1),**
- collection (42) of the confidential data (2, 20),
- transformation (43) of the confidential data (2, 20) into encrypted data (2, 21), by means of an encryption **using the first recording (31) representative of a biometric information (3) to determine an encryption key, such that the inverse transformation (62) can only be carried out by means of said biometric information (3),**
- a production phase (5) comprising the following steps:
- manufacture (51) of a blank security device (1, 10),
- storage (52) of said encrypted data (2, 21) in said security device (1), then
- delivery of the security device (1, 11), then
- a post-production activation phase (6) comprising the following steps:
∘ - **a step of second acquisition (61) of a second recording (32) representative of the same biometric information (3) from the holder (7, 72),**
∘ - transformation (62) of the encrypted data (2, 21) to find the confidential data (2, 22), by means of a decryption, so that the security device contains said decrypted data, **the decryption using the second recording (32) representative of the biometric information (3) to determine a decryption key,** then
- storage of the confidential data in the security device.

2. The method according to claim 1, wherein the encryption (43) and decryption (62) transformation use "crypto-biometric"-type algorithms.

3. The method according to any one of claims **1** or 2, wherein the security device (1) comprises a processing unit (14) and wherein the decryption operation (62) is carried out by the processing unit (14) of the security device (1).

4. The method according to any one of claims **1** to **3,** wherein the decryption operation (62) can only be carried out once.

5. The method according to any one of claims **1** to **4,** wherein the decryption operation (62) is able to provide a report indicating the good or bad operation of the decryption.

6. A security device (1) obtained by the method according to any one of claims **1** to **5,** the security device comprising a processing unit (14) configured to carry out the decryption operation of said method.

7. An electronic document comprising a security device (1) according to claim 6.

8. The electronic document according to claim **7,** wherein the electronic document is a travel document.

9. The electronic document according to any one of claims 7 or **8,** wherein the confidential data (2, 20) comprise a photograph of the bearer and/or at least one fingerprint of the bearer.
